# FASCICULE DE BREVET EUROPEEN

(11) **EP 0 936 128 B1**
(45) Date de publication et mention de la délivrance du brevet: **19.03.2003**
(21) Numéro de dépôt: 98403153.4
(22) Date de dépôt: 14.12.1998
(51) Int. Cl.: B62D 1/10, F16D 1/108

(54) **Système de direction, volant et colonne convenant à ce système**
Lenksystem, Lenkrad und Lenkradsäule für ein solches System
Steering system, steering wheel and column for such a system

(30) Priorité: 17.02.1998 FR 9801885
(43) Date de publication de la demande: 18.08.1999
(73) Titulaire: Autoliv-Isodelta, 86190 Chire-en-Montreuil (FR)
(72) Inventeur: Valentin, Jacques, 86190 Chire en Montreuil (FR); Chapelain, Etienne, 86440 Migne-Auxances (FR)
(74) Mandataire: Rinuy, Santarelli

(56) Documents cités:
- EP-A- 0 776 811
- WO-A-96/38326

## Description

L'invention a trait aux systèmes de direction pour véhicules.

Elle concerne plus particulièrement l'assemblage entre la partie terminale de la colonne de direction et le moyeu du volant.

On sait que ces moyeux présentent classiquement :
- un alésage garni de cannelures orientées suivant une direction axiale, adapté à s'engager par coulissement, suivant cette direction, sur la partie terminale de la colonne, elle-même garnie de cannelures correspondantes ;
- une surface de butée adaptée à venir porter sur une surface d'arrêt correspondante de la colonne pour arrêter le mouvement d'enfoncement du moyeu vis-à-vis de la colonne suivant la direction axiale ; et
- une surface d'appui, opposée à la surface de butée, adaptée à être mise en prise par un écrou ou par la tête d'une vis prévu(e) pour être engagé(e) sur une tige filetée ou sur un taraudage que comporte la colonne, le serrage de la vis ou de l'écrou enserrant le moyeu entre la surface d'arrêt de la colonne, sur laquelle porte la surface de butée du moyeu, et l'écrou ou la tête de la vis, qui porte sur la surface d'appui du moyeu.

On connaît déjà par WO 96/38326 qui sert de base à la présentation en deux parties, un système de direction pour véhicule dans lequel :
- la partie terminale de la colonne comporte un embout d'encliquetage adapté à passer dans l'alésage du moyeu du volant et présentant une surface d'extrémité se raccordant à une surface latérale en forme de gorge qui est en retrait par rapport à ladite surface d'extrémité ; et
- le moyeu comporte, afin d'être verrouillé par encliquetage sur la colonne, une multiplicité de billes dont chacune admet une position de verrouillage où elle est adaptée à porter tant sur une surface d'appui du moyeu que sur la surface latérale en forme de gorge de l'embout d'encliquetage quand la surface de butée du moyeu porte sur la surface d'arrêt de la colonne, des ressorts étant prévus dans le moyeu pour solliciter les billes vers la position de verrouillage.

L'invention vise à permettre que l'opération de montage du volant sur la colonne de direction soit aisée, tout en procurant une fixation ayant les qualités requises, notamment en matière de sécurité.

Elle propose à cet effet un système de direction pour véhicule, comportant :
- une colonne présentant une partie terminale munie d'une surface d'arrêt ; et
- un volant comportant un moyeu présentant un alésage adapté à s'engager par coulissement suivant une direction axiale sur ladite partie terminale de ladite colonne, présentant une surface de butée adaptée à venir porter sur ladite surface d'arrêt de ladite colonne pour arrêter le mouvement d'enfoncement du moyeu vis-à-vis de la colonne suivant ladite direction axiale, et présentant une surface d'appui opposée à ladite surface de butée, adaptée à fournir un appui pour un moyen de verrouillage axial servant à maintenir ledit moyeu enserré entre la surface d'arrêt de la colonne, sur laquelle porte alors la surface de butée du moyeu, et ledit moyen de verrouillage, portant alors sur la surface d'appui tandis qu'il est en prise sur ladite colonne ;
système dans lequel :
- ladite partie terminale de la colonne comporte un embout d'encliquetage adapté à passer dans l'alésage du moyeu du volant et présentant une surface d'extrémité se raccordant à une surface latérale en retrait par rapport à ladite surface d'extrémité ; et
- ledit moyen de verrouillage du moyeu du volant comporte au moins un élément d'encliquetage admettant une position de verrouillage où il est adapté à porter tant sur ladite surface d'appui du moyeu que sur ladite surface latérale de l'embout d'encliquetage de la colonne quand la surface de butée du moyeu porte sur la surface d'arrêt de la colonne, un moyen élastique étant prévu dans ledit moyeu pour solliciter ledit élément d'encliquetage vers ladite position de verrouillage ;
système caractérisé en ce que :
- ladite surface latérale de ladite partie terminale de la colonne est inclinée par rapport à ladite direction axiale, vers l'intérieur et vers ladite surface d'arrêt tandis que ladite surface d'appui du moyeu du volant est inclinée par rapport à ladite direction axiale, vers l'intérieur et vers ladite surface de butée et vient en regard de ladite surface latérale de l'embout d'encliquetage de la colonne quand la surface de butée du moyeu porte sur la surface d'arrêt de la colonne ; et
- ledit élément d'encliquetage est une cale rigide sollicitée vers ladite surface d'appui par ledit moyen élastique, ladite cale comportant une première surface inclinée adaptée à porter sur ladite surface d'appui et comportant une deuxième surface inclinée opposée à ladite première surface, adaptée à coopérer avec ladite surface latérale dudit embout.

Lors de l'enfoncement du moyeu sur la colonne, l'embout d'encliquetage vient en contact par sa surface d'extrémité avec la cale puis entraîne cette dernière à l'encontre du moyen élastique tout en la faisant glisser sur la surface d'appui, la cale s'écartant ainsi progressivement vers l'extérieur jusqu'à une position où la cale s'est suffisamment écartée pour que l'embout puisse la dépasser, le moyen élastique repoussant alors la cale qui vient se loger entre la surface d'appui du moyeu et la surface latérale de l'embout, et lorsque le mouvement d'enfoncement du moyeu sur la colonne est terminé, c'est-à-dire lorsque la surface de butée du moyeu porte sur la surface d'arrêt de la colonne, la cale se trouve dans la position de verrouillage où elle porte d'un côté sur la surface d'appui du moyeu et du côté opposé sur la surface latérale de l'embout d'encliquetage et ne peut progresser davantage entre ces surfaces.

Le volant et la colonne sont alors verrouillés axialement puisque le contact entre la surface de butée du moyeu et la surface d'arrêt de la colonne interdit tout mouvement axial dans le sens de l'enfoncement et que le contact de la cale avec à la fois la surface d'appui du moyeu et la surface latérale de l'embout de la colonne interdit tout mouvement en sens inverse.

On notera que l'inclinaison des surfaces avec lesquelles la cale est en contact dans sa position de verrouillage (surface d'appui du moyeu et surface latérale de l'embout de la colonne) est telle que s'il s'exerce un effort d'extraction sur le volant, toute sollicitation appliquée à la cale par l'une des surfaces se traduit par l'exercice sur la cale d'un effort dirigé vers l'autre surface, ce qui permet d'éviter que la cale recule, y compris dans les cas où le moyen élastique qui sollicite la cale vers la position de verrouillage exerce un effort relativement modéré.

On voit que l'opération de montage du volant sur la colonne est particulièrement aisé, puisqu'il suffit d'enfoncer jusqu'en butée le moyeu sur la partie terminale de la colonne de direction, tout en procurant une fixation ayant les qualités requises, notamment en matière de sécurité.

L'invention vise également, sous un deuxième aspect, un volant de direction pour véhicule, convenant au système tel qu'exposé ci-dessus, ce volant comportant un moyeu présentant :
- un alésage adapté à s'engager par coulissement suivant une direction axiale sur le bout d'une colonne de direction que comporte le véhicule ;
- une surface de butée adaptée à venir porter sur une surface d'arrêt correspondante de ladite colonne pour arrêter le mouvement d'enfoncement du moyeu vis-à-vis de la colonne suivant ladite direction axiale ; et
- une surface d'appui opposée à ladite surface de butée, adaptée à fournir un appui pour un moyen de verrouillage axial servant à maintenir le moyeu enserré entre la surface d'arrêt de la colonne, sur laquelle porte alors la surface de butée du moyeu, et ledit moyen de verrouillage, portant alors sur la surface d'appui tandis qu'il est en prise sur ladite colonne ;
caractérisé en ce que :
- ladite surface d'appui est inclinée par rapport à ladite direction axiale, vers l'intérieur et vers ladite surface de butée ; et
- ledit moyen de verrouillage comporte au moins une cale rigide d'encliquetage sollicité vers ladite surface d'appui par un moyen élastique, ladite cale comportant une première surface inclinée adaptée à porter sur ladite surface d'appui et comportant une deuxième surface inclinée opposée à ladite première surface, adaptée à coopérer avec une surface inclinée de ladite colonne.

L'invention vise enfin, sous un troisième aspect, une colonne de direction pour véhicule, convenant au système tel qu'exposé ci-dessus, comportant un embout d'encliquetage présentant une surface d'extrémité se raccordant à une surface latérale en retrait par rapport à ladite surface d'extrémité ; ledit embout étant fixé par vissage dans un trou taraudé ou sur une tige filetée normalement prévu(e) pour accueillir respectivement une vis et un écrou de verrouillage de volant.

L'exposé de l'invention sera maintenant poursuivi par la description d'exemples préférés de réalisation, donnée ci-après à titre illustratif et non limitatif, en référence aux dessins annexés. Sur ceux-ci :
- la figure 1 est une vue en plan, prise de dessus, d'une colonne de direction et du moyeu d'un volant conformes à l'invention, le chapeau de fermeture et le ressort que comporte le moyeu n'étant pas représentés pour la clarté du dessin ;
- la figure 2 est une vue en élévation-coupe de ce moyeu, prise comme indiqué par II-II sur la figure 1 ;
- les figures 3 et 4 sont des vues similaires montrant respectivement le moyeu en cours d'enfoncement sur la partie terminale de la colonne de direction et montrant le moyeu en position de fixation sur cette colonne ;
- la figure 5 est une autre vue similaire montrant les cales d'encliquetage en cours de déverrouillage ;
- la figure 6 est une vue en élévation de la partie terminale d'une variante de la colonne de direction, avec un arrachement partiel montrant la tige filetée dont est muni l'embout d'encliquetage pour coopérer avec l'alésage taraudé du reste de la colonne de direction, qui est de type conventionnel ;
- la figure 7 est une vue similaire pour une variante dans laquelle le reste de la colonne de direction est du type conventionnel à tige filetée plutôt qu'à trou taraudé ;
- les figures 8 à 11 sont des vues similaires aux figures 1 à 4, respectivement, pour une variante dans laquelle l'embout d'encliquetage et la surface d'arrêt de la colonne de direction sont en tronc de pyramide plutôt qu'en tronc de cône ;
- la figure 12 est une vue similaire à la figure 8, montrant une variante des moyens de déverrouillage des cales d'encliquetage et montrant l'outil correspondant ;
- la figure 13 est une vue similaire à la figure 12, mais avec l'outil en place sur le levier destiné à le recevoir, dans la position de déverrouillage plutôt que dans la position de verrouillage ; et
- la figure 14 est la vue partielle en coupe repérée par XIV-XIV sur la figure 13.

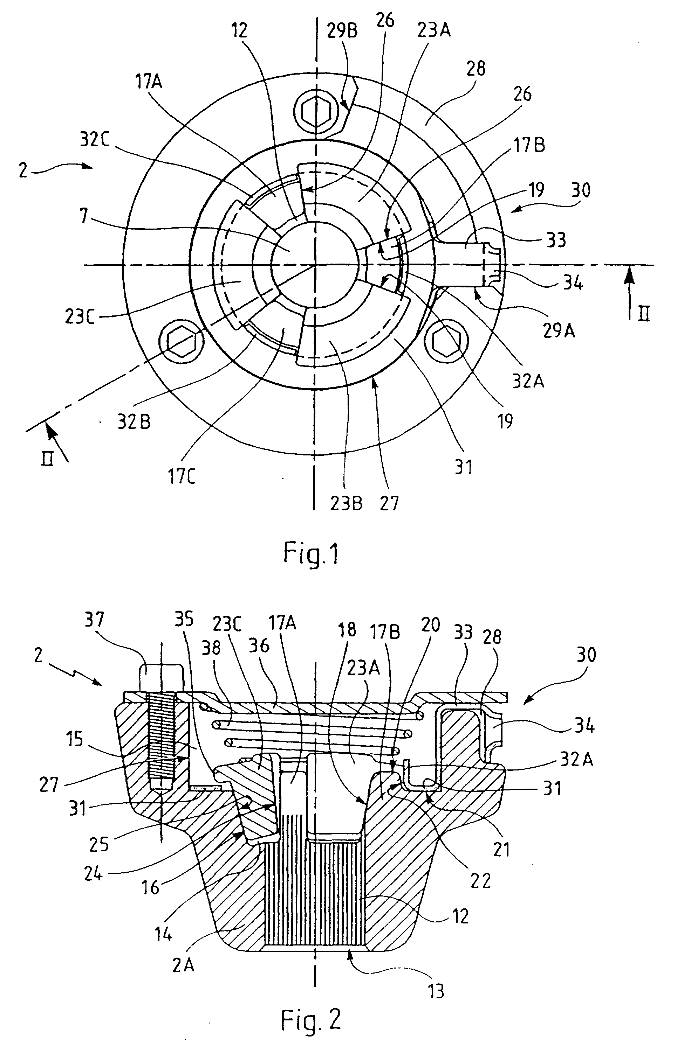

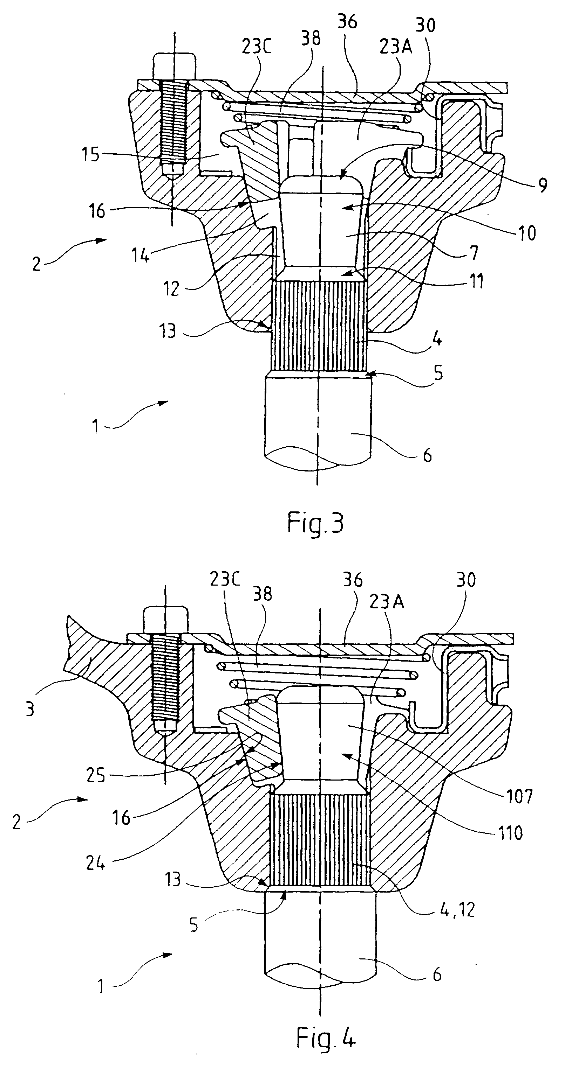

Le système de direction illustré sur les figures 1 à 4 comporte une colonne de direction dont la partie terminale 1 est montrée en détail sur les figures 3 et 4, et comporte un volant de direction dont on a essentiellement représenté le moyeu 2, une branche 3 de ce volant étant illustrée partiellement sur la figure 4.

La partie terminale 1 de la colonne de direction comporte classiquement une portion 4 garnie de cannelures orientées axialement à une extrémité de laquelle se trouve une surface d'arrêt 5 formée ici par un chanfrein qui relie la portion cannelée 4 à une portion lisse 6 de plus grand diamètre.

La partie terminale 1 comporte, de l'autre côté de la portion cannelée 4, un embout d'encliquetage 7. Cet embout présente une surface d'extrémité 9 dont le diamètre externe est inférieur à celui de la portion 4, le centre de la surface 9 étant plat et ses bords étant arrondis. La surface 9 se raccorde à une surface latérale 10 qui est en retrait par rapport à la surface 9.

Plus précisément, la surface 10 est tronconique et elle se raccorde par son grand diamètre à la surface d'extrémité 9. A l'opposé de celle-ci, la surface 10 se raccorde par son petit diamètre à une surface tronconique 11 formée par un chanfrein reliant l'embout d'encliquetage 7 et la portion cannelée 4.

Le moyeu 2 comporte un corps 2A en métal moulé et usiné. Ce corps présente un alésage 12 garni de cannelures à une extrémité duquel se trouve une surface de butée 13.

Le diamètre de l'alésage 12 et la conformation de ses cannelures correspondent respectivement au diamètre et à la conformation des cannelures de la portion 4 de la partie terminale 1 afin que l'alésage 12 puisse s'engager par coulissement sur la portion 4, ainsi que montré sur la figure 3. La coopération entre les cannelures de la portion 4 et de l'alésage 12 permet d'immobiliser en rotation le volant par rapport à la colonne de direction.

La surface de butée 13 a la même conformation que la surface d'arrêt 5 de la partie terminale 1, et sert à arrêter le mouvement d'enfoncement du moyeu 2 vis-à-vis de la partie terminale 1 suivant la direction axiale, lorsque les surfaces 13 et 5 viennent porter l'une sur l'autre, ainsi que montré sur la figure 4.

Ainsi qu'on le voit plus particulièrement sur la figure 3, à l'opposé de la surface de butée 13, l'alésage 12 débouche dans un logement coaxial à cet alésage, en forme de gradin, l'alésage 12 débouchant plus précisément dans un espace 14 ayant la forme générale d'une cuvette à bord évasé, l'espace 14 débouchant lui-même dans un espace 15 ayant la forme générale d'une cuvette à bord droit.

Le bord évasé de l'espace 14 est formé par une surface tronconique 16 dont le grand diamètre est du côté de l'espace 15 et dont le petit diamètre du côté de l'alésage 12.

Trois redents 17A, 17B et 17C faisant également partie du corps 2A sont disposés à intervalle régulier essentiellement dans l'espace 14.

Ces trois redents sont identiques, ils présentent chacun une surface interne 18 (figure 2) se raccordant à la paroi de l'alésage 12 et s'évasant vers l'espace 15, deux parois latérales 19 (figure 1) tournées vers l'espace 14 et globalement orientées chacune suivant un plan radial, une surface supérieure 20 (figure 2) plate se trouvant au-dessus de la surface de fond 21 de l'espace 15, et une surface 22 qui relie les surfaces 20 et 21.

Les surfaces 18 et 22 sont incurvées de sorte que les redents 17A, 17B et 17C ont une section en plan qui a la forme d'un tronc de secteur angulaire. Les surfaces latérales 19 sont légèrement inclinées par rapport à la direction axiale, les deux surfaces latérales d'un même secteur s'écartant dans le sens allant vers la surface de butée 13.

Dans chaque intervalle entre deux redents est disposée une cale d'encliquetage dont la section en plan a globalement une forme en tronc de secteur angulaire de plus grand angle au sommet que les redents 17A, 17B et 17C.

Plus précisément, une cale 23A est disposée entre les redents 17A et 17B, une cale 23B entre les redents 17B et 17C et une cale 23C entre les redents 17C et 17A.

Chacune des cales 23A à 23C présente une surface interne 24 (figure 2) de même forme que la surface latérale 10 de l'embout 7, une surface externe 25 de même forme que la surface 16 de l'espace 14, et deux parois latérales 26 (figure 1) de même forme que les parois latérales 19 des redents 17A, 17B et 17C.

L'écart entre les parois 24 et 25 est tel que quand la partie terminale 1 est engagée dans le moyeu 2 avec la surface de butée 13 qui porte sur la surface d'arrêt 5, chaque cale a sa surface 24 qui est en contact intime avec la surface latérale 10 de l'embout 7 et sa surface 25 qui est en contact intime avec la surface 16 du corps 2A, ainsi que montré sur la figure 4, l'écartement angulaire entre les parois latérales 26 étant tel que les parois latérales 26 portent intimement sur les parois 19 des redents entre lesquels la cale est disposée alors que cette cale est à une hauteur telle que le fond de la cale ne rencontre le fond de l'espace 14, ainsi que montré sur la figure 2.

La surface de fond 21 de l'espace 15 est plate et sa surface latérale 27 est cylindrique.

Un évidement 28 à section en L retourné est ménagé extérieurement sur environ 90° en haut de la partie du corps 2A appartenant au moyeu, cet évidement étant limité latéralement par des parois d'extrémité 29A et 29B (figure 1).

Une bague de déverrouillage 30 est mise en place dans l'espace 15 et dans l'évidement 28.

Cette bague comporte un anneau plat 31 disposé contre la paroi de fond 21 de l'espace 15, trois pattes de levage 32A, 32B et 32C disposées chacune du côté interne de la bague 31 et ayant une surface supérieure inclinée de sorte que la hauteur de chaque patte 32A à 32C augmente lorsqu'on se déplace le long de cette patte dans le sens des aiguilles d'une montre (pattes vues comme sur la figure 1), et un levier de manoeuvre 33 en forme de U renversé, se raccordant à la bague 31 du côté externe, la jambe interne du levier 33 étant disposée contre la paroi 27 et le reste de ce levier étant disposé dans l'évidement 28, une empreinte 34 étant ménagée dans la jambe externe pour un outil de manoeuvre.

Lorsque le levier 33 est contre la paroi d'extrémité 29A, ainsi que montré sur la figure 1, chacune des pattes 32A à 32C se trouve en regard de la surface externe 22 d'un redent 17A à 17C respectif.

Chacune des cales 23A à 23C présente une aile arrière 35 en saillie par rapport à la surface 25, chacune des pattes 32A à 32C pouvant venir sous l'aile 35 d'une cale respective, afin de la soulever lorsque le levier 33 est entraîné vers la surface d'extrémité 29B, afin de déverrouiller le volant, ainsi qu'on l'expliquera ultérieurement.

L'espace 15 est fermé par un chapeau 36 fixé sur le corps 2A par des vis 37, un ressort de compression hélicoïdal 38 étant disposé entre les cales 23A à 23C et le chapeau 36, des bossages respectifs étant prévus sur le chapeau 36 et sur les cales pour maintenir le ressort 38 centré.

On va maintenant expliquer comment se déroulent les opérations de montage et de démontage du volant.

L'alésage 12 du moyeu 2 est engagé sur la partie terminale 1 de la colonne de direction par un mouvement d'enfoncement au cours duquel la surface d'extrémité 9 de l'embout 7 finit par rencontrer les cales 23A à 23C, celles-ci sont alors repoussées par l'embout 7 à l'encontre du ressort 38 tout en glissant par leurs surfaces 25 sur la surface 16 de sorte que les cales s'écartent jusqu'à une position, montrée sur la figure 3, où l'embout 7 peut dépasser les cales 23A à 23C, qui sont alors repoussées par le ressort 38, et lorsque le moyeu est complètement enfoncé sur la partie terminale 1, c'est-à-dire lorsque la surface de butée 13 vient porter contre la surface d'arrêt 5, les cales 23A à 23C sont chacune insérées entre les surfaces 10 et 16, sur lesquelles elles portent intimement respectivement par leurs surfaces 24 et par leurs surfaces 25.

On observera que du fait de l'inclinaison des surfaces 10 et 16, tout mouvement orienté axialement qui tend à extraire le volant de la colonne, exerce sur les cales 23A à 23C par l'intermédiaire de la surface 10 ou de la surface 16, un effort dirigé vers l'autre surface, de sorte que ces efforts ne peuvent pas entraîner les cales, la colonne et le volant étant ainsi verrouillés.

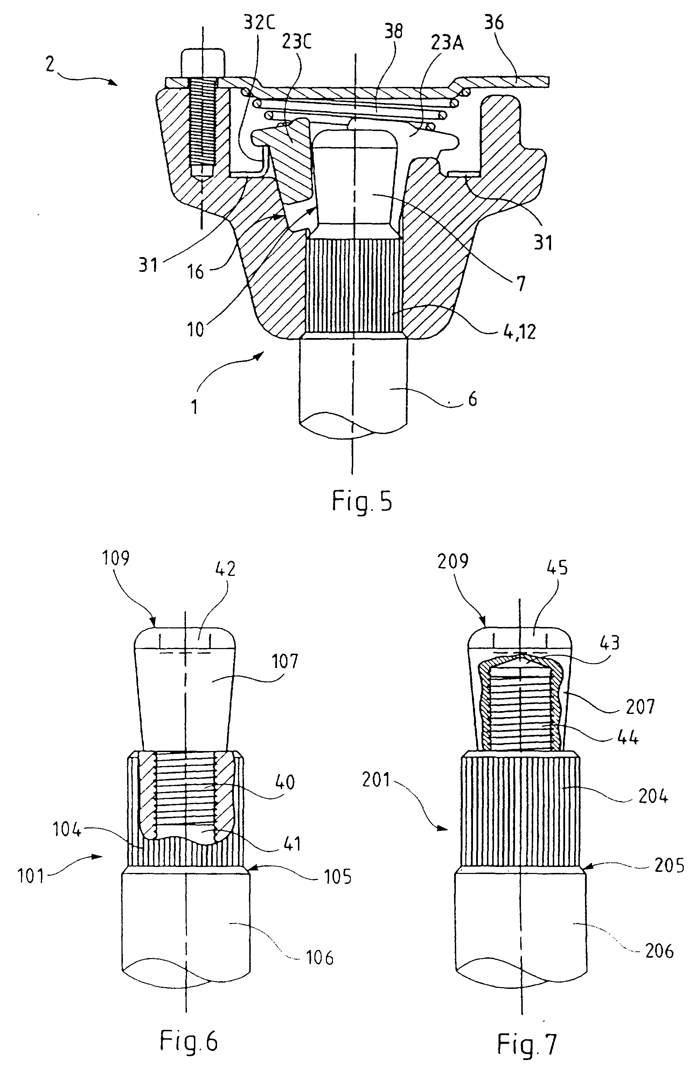

Pour procéder au démontage du volant, il suffit d'introduire un outil tel qu'une petite tige ronde dans l'empreinte 34 et d'entraîner le levier 33 vers la surface 29B, les pattes 32A à 32C passent progressivement sous l'aile 35 des cales 23A à 23C, respectivement, en les soulevant, ainsi que montré sur la figure 5, et lorsque le levier 33 arrive en butée sur la surface 29B, les cales sont suffisamment soulevées pour que le volant puisse être extrait de la partie terminale .

On observera que l'inclinaison par rapport à la direction axiale de la surface 10 est plus petite que l'inclinaison de la surface 16, cette différence d'inclinaison faisant qu'au démontage, il se crée très rapidement un espace entre les cales et l'embout 7, ce qui évite à avoir à vaincre d'importants efforts de frottement pour lever les cales.

Afin d'assurer que la bague 30 est spontanément dans la position où le levier 33 est contre la surface d'extrémité 29A (position de verrouillage du volant), l'une des extrémités du ressort 38 est accrochée au chapeau 36 et l'autre extrémité à la bague 30, le ressort 38 procurant ainsi également l'effort de rappel de la bague 30.

Dans la variante montrée sur les figures 6 et 7, la partie terminale de la colonne de direction n'est pas monobloc comme la partie 1, mais a été obtenue en complétant une partie terminale conventionnelle de colonne de direction et par un embout d'encliquetage rapporté par vissage sur l'élément normalement prévu pour recevoir la vis ou l'écrou de verrouillage du volant.

D'une façon générale, on a utilisé les mêmes références que pour la partie terminale 1, mais additionnée du chiffre 100 pour la variante de la figure 6 et du chiffre 200 pour celle de la figure 7.

La partie terminale 101 de la colonne de direction montrée sur la figure 6 comporte un embout d'encliquetage 107 muni d'une tige filetée 40 grâce à laquelle cet embout est fixé sur le reste de la partie terminale 101, qui est du type classique comportant un trou taraudé 41 normalement prévu pour la vis de fixation du volant, mais servant ici au montage de l'embout 107.

Un empreinte 42, ici hexagonale, est ménagée en creux dans la surface d'extrémité 109 pour permettre de bloquer l'embout 107 sur le reste de la partie terminale 101 grâce à une clé appropriée.

La partie terminale 201 de la colonne de direction montrée sur la figure 7 comporte un embout 207 présentant un alésage taraudé 43 grâce auquel cet embout est monté sur le reste de la partie terminale 201 qui est munie d'une tige filetée 44 servant normalement à l'écrou de verrouillage du volant mais qui sert ici à la fixation de l'embout 207, celui-ci étant muni d'une empreinte 45 similaire à l'empreinte 42 pour permettre son blocage.

Un moyen anti-dévissage est prévu par sécurité, ici une rondelle adéquate non représentée prévue dans chacune des parties terminales 101 et 201 entre l'embout 107 ou 207 et le reste de cette partie terminale.

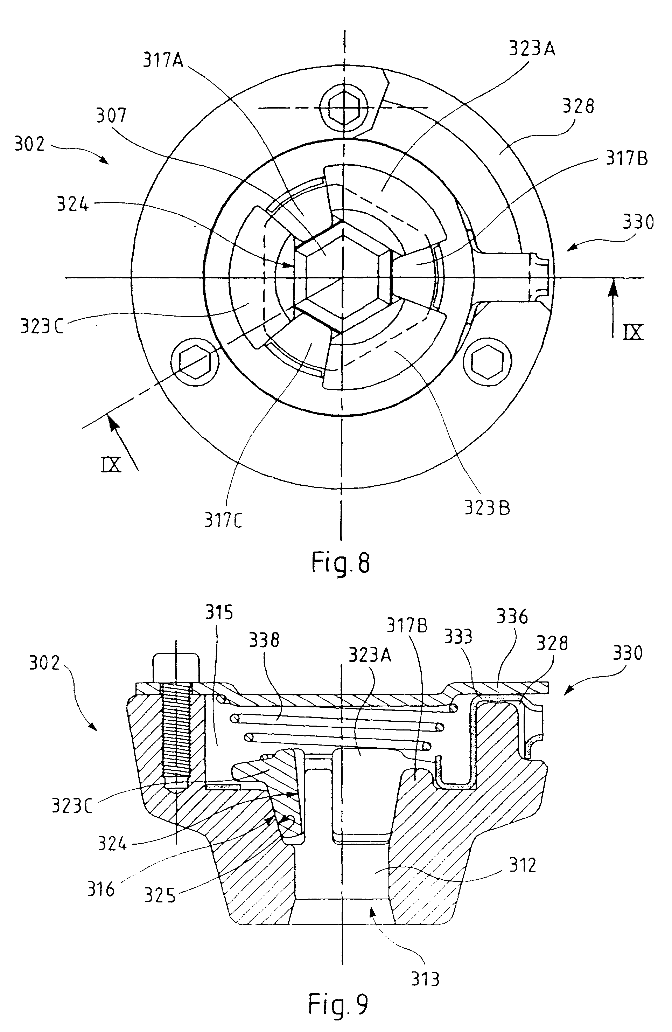

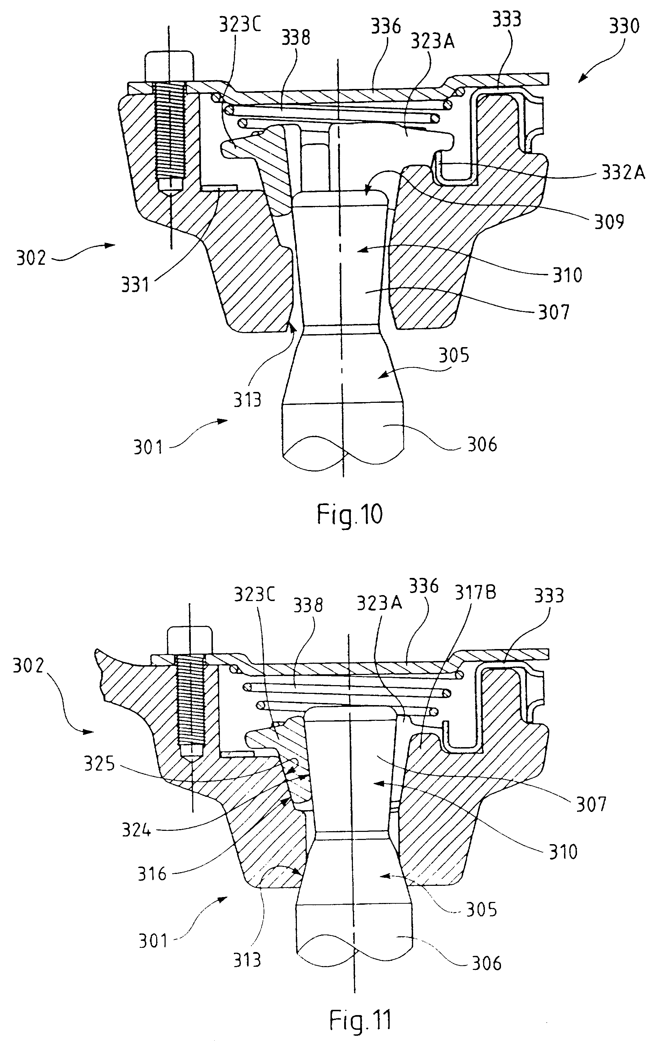

Dans la variante montrée sur les figures 8 à 11, la partie terminale de la colonne de direction est dépourvue de cannelures, la surface latérale de l'embout d'encliquetage n'est pas en forme de tronc de cône mais en forme de tronc de pyramide et il en va de même pour la surface d'arrêt de cette partie terminale.

D'une façon générale, on a utilisé les mêmes références numériques que pour le mode de réalisation des figures 1 à 4, mais additionnées du chiffre 300.

Comme on le voit plus particulièrement sur les figures 8 et 9, le moyeu 302 est similaire au moyeu 2, si ce n'est que l'alésage 312 est lisse au lieu de présenter des cannelures, que la surface de butée 313 est en forme de tronc de pyramide au lieu d'être en forme de tronc de cône, et que la surface interne 324 des cales 323A à 323C est plate au lieu d'être incurvée.

Ainsi qu'expliqué ci-dessus, la surface d'arrêt 305 de la partie terminale 301 est en forme de tronc de pyramide, ici à base hexagonale régulière, et de même la surface latérale 310 de l'embout d'encliquetage 307 est en forme de tronc de pyramide à base hexagonale, les pans des surfaces 305 et 310 étant mutuellement en correspondance.

Dans ce mode de réalisation, l'immobilisation en rotation entre le moyeu 302 et la partie terminale 301 n'est pas obtenu grâce à des cannelures, mais grâce à la coopération de la surface d'arrêt 305 et de la surface de butée 313 et grâce à la coopération de la surface 310 avec les cales 323A à 323C.

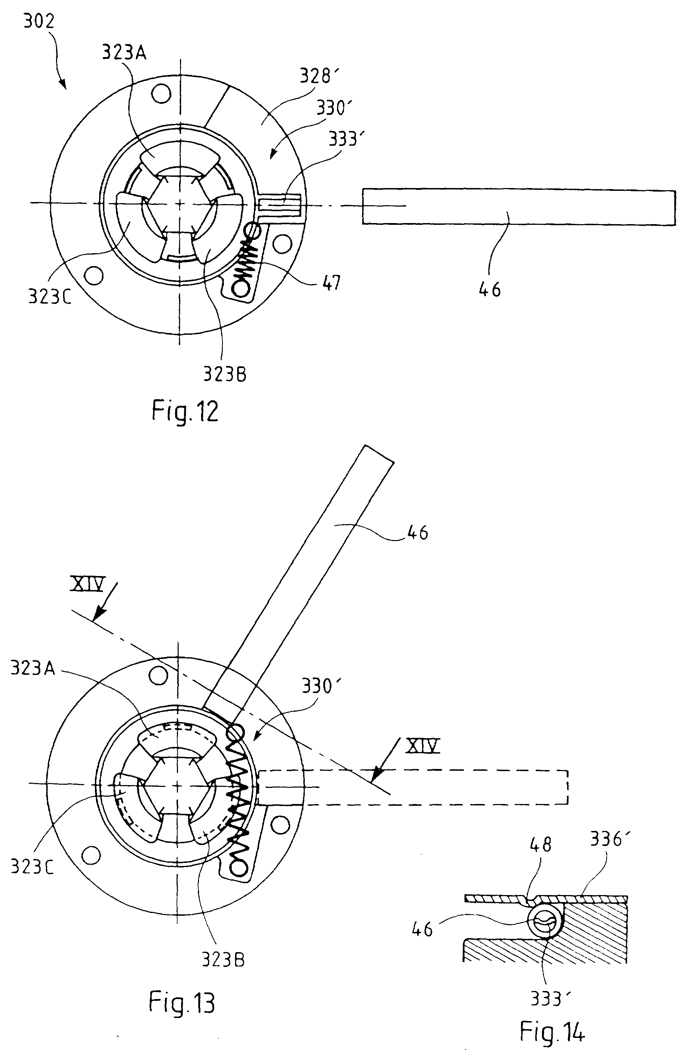

Dans la variante montrée sur les figures 12 à 14, l'évidement 328 est remplacé par un évidement 328' pratiqué dans la totalité de la paroi limitant latéralement l'espace 315 et le levier 333 est remplacé par un levier 333' droit prévu pour coopérer avec un outil 46 formé par un tube cylindrique, un ressort 47 dont une extrémité est fixée sur le corps du moyeu et l'autre sur la bague 330' étant prévu, au lieu du ressort 338, pour ramener la bague dans la position montrée sur la figure 12.

L'outil 46 est prévu pour s'engager autour du levier 333' dans cette position, ainsi que montré en trait interrompu sur la figure 13, et sert à faire pivoter la bague 330' jusqu'à la position de déverrouillage montrée sur la figure 13.

Ainsi qu'on le voit sur la figure 14, le chapeau 336 est remplacé par un chapeau 336' qui comporte un bossage formant un cran interne 48 permettant, grâce à l'élasticité de ce chapeau, qui est en tôle métallique, d'immobiliser l'outil 46 dans la position de déverrouillage montrée sur la figure 13, le cran étant toutefois d'une épaisseur suffisamment faible pour qu'en l'absence de l'outil 46 le levier 333 ne puisse être retenu par ce cran.

Grâce au blocage procuré par le cran 48, l'opérateur n'a pas besoin de maintenir le levier 46 pour extraire le volant de la colonne de direction, et il n'y a pas de risque que la bague 330' reste par inadvertance en position déverrouillée, l'extraction de l'outil 46 provoquant automatiquement, grâce au ressort 47, le retour dans la position de verrouillage montrée sur la figure 12.

De nombreuses variantes sont possibles en fonction des circonstances, et on rappelle à cet égard que l'invention ne se limite pas aux exemples décrits et représentés.

## Revendications

1. Système de direction pour véhicule, comportant :
- une colonne présentant une partie terminale (1 ; 101 ; 201 ; 301) munie d'une surface d'arrêt (5 ; 105 ; 205 ; 305) ; et
- un volant comportant un moyeu présentant un alésage adapté à s'engager par coulissement suivant une direction axiale sur ladite partie terminale (1 ; 101 ; 201 ; 301) de ladite colonne, présentant une surface de butée (13 ; 313) adaptée à venir porter sur ladite surface d'arrêt (5 ; 105 ; 205 ; 305) de ladite colonne pour arrêter le mouvement d'enfoncement du moyeu vis-à-vis de la colonne suivant ladite direction axiale, et présentant une surface d'appui (16 ; 316) opposée à ladite surface de butée (13 ; 313), adaptée à fournir un appui pour un moyen de verrouillage axial servant à maintenir ledit moyeu enserré entre la surface d'arrêt (5 ; 105 ; 205 ; 305) de la colonne, sur laquelle porte alors la surface de butée (13 ; 313) du moyeu, et ledit moyen de verrouillage, portant alors sur la surface d'appui (16 ; 316) tandis qu'il est en prise sur ladite colonne ;
système dans lequel :
- ladite partie terminale (1, 101 ; 201 ; 301) de la colonne comporte un embout d'encliquetage (7 ; 107 ; 207 ; 307) adapté à passer dans l'alésage (12 ; 312) du moyeu du volant et présentant une surface d'extrémité (9 ; 109 ; 209 ; 309) se raccordant à une surface latérale (10 ; 110 ; 210 ; 310) en retrait par rapport à ladite surface d'extrémité (9 ; 109 ; 209 ; 309) ; et
- ledit moyen de verrouillage du moyeu du volant comporte au moins un élément d'encliquetage (23A, 23B, 23C ; 323A, 323B, 323C) admettant une position de verrouillage où il est adapté à porter tant sur ladite surface d'appui (16 ; 316) du moyeu que sur ladite surface latérale (10 ; 110 ; 210 ; 310) de l'embout d'encliquetage (7 ; 107 ; 207 ; 307) de la colonne quand la surface de butée (13 ; 313) du moyeu porte sur la surface d'arrêt (5 ; 105 ; 205 ; 305) de la colonne, un moyen élastique (38 ; 338) étant prévu dans ledit moyeu (2 ; 302) pour solliciter ledit élément d'encliquetage (23A, 23B, 23C ; 323A, 323B, 323C) vers ladite position de verrouillage ;
système **caractérisé en ce que** :
- ladite surface latérale (10 ; 110 ; 210 ; 310) de ladite partie terminale (1 ; 101 ; 201 ; 301) de la colonne est inclinée par rapport à ladite direction axiale, vers l'intérieur et vers ladite surface d'arrêt (5 ; 105 ; 205 ; 305) tandis que ladite surface d'appui (16 ; 316) du moyeu du volant est inclinée par rapport à ladite direction axiale, vers l'intérieur et vers ladite surface de butée (13 ; 313) et vient en regard de ladite surface latérale (10 ; 110 ; 210 ; 310) de l'embout d'encliquetage (7 ; 107 ; 207 ; 307) de la colonne quand la surface de butée (13 ; 313) du moyeu porte sur la surface d'arrêt (5 ; 105 ; 205 ; 305) de la colonne ; et
- ledit élément d'encliquetage est une cale rigide (23A, 23B, 23C ; 323A, 3238, 323C) sollicitée vers ladite surface d'appui (16 ; 316) par ledit moyen élastique (38 ; 338), ladite cale (23A, 23B, 23C ; 323A, 323B, 323C) comportant une première surface inclinée (25 ; 325) adaptée à porter sur ladite surface d'appui (16 ; 316) et comportant une deuxième surface inclinée (24 ; 324) opposée à ladite première surface, adaptée à coopérer avec ladite surface latérale (10 ; 110 ; 210 ; 310) dudit embout.

2. Système selon la revendication 1, **caractérisé en ce que** ladite surface latérale (10 ; 110 ; 210) de l'embout d'encliquetage (7 ; 107 ; 207) est tronconique, ladite partie terminale (1 ; 101 ; 201) comportant une portion distincte (4 ; 104 ; 204) pour immobiliser en rotation ledit moyeu (2).

3. Système selon la revendication 1, **caractérisé en ce que** ladite surface latérale (310) dudit embout d'encliquetage (307) est en forme de tronc de pyramide.

4. Système selon la revendication 3, **caractérisé en ce que** ladite surface latérale (310) dudit embout d'encliquetage (307) est en forme tronc de pyramide à base hexagonale, ledit volant comportant trois dites cales d'encliquetage.

5. Volant de direction pour véhicule, convenant au système selon l'une quelconque des revendications 1 à 4, comportant un moyeu (2 ; 302) présentant :
- un alésage adapté à s'engager par coulissement suivant une direction axiale sur la partie terminale (1 ; 101 ; 201 ; 301) d'une colonne de direction que comporte le véhicule ;
- une surface de butée (13 ; 313) adaptée à venir porter sur une surface d'arrêt correspondante (5 ; 105 ; 205 ; 305) de ladite colonne pour arrêter le mouvement d'enfoncement du moyeu vis-à-vis de la colonne suivant ladite direction axiale ; et
- une surface d'appui (16 ; 316) opposée à ladite surface de butée (13 ; 313), adaptée à fournir un appui pour un moyen de verrouillage axial servant à maintenir le moyeu enserré entre la surface d'arrêt de la colonne, sur laquelle porte alors la surface de butée du moyeu, et ledit moyen de verrouillage, portant alors sur la surface d'appui tandis qu'il est en prise sur ladite colonne ;
**caractérisé en ce que** :
- ladite surface d'appui (16 ; 316) est inclinée par rapport à ladite direction axiale, vers l'intérieur et vers ladite surface de butée (13 ; 313) ; et
- ledit moyen de verrouillage comporte au moins une cale rigide d'encliquetage (23A, 23B, 23C ; 323A, 323B, 323C) sollicitée vers ladite surface d'appui (16 ; 316) par un moyen élastique (38 ; 338), ladite cale (23A, 23B, 23C ; 323A, 323B, 323C) comportant une première surface inclinée (25 ; 325) adaptée à porter sur ladite surface d'appui (16 ; 316) et comportant une deuxième surface inclinée (24 ; 324) opposée à ladite première surface, adaptée à coopérer avec une surface inclinée (10 ; 110 ; 210 ;310) de ladite colonne.

6. Volant selon la revendication 5, **caractérisé en ce que** ladite surface d'appui (16 ; 316) est tronconique et coaxiale au moyeu (2 ; 302).

7. Volant selon l'une quelconque des revendications 5 ou 6, **caractérisé en ce que** ladite deuxième surface (24 ; 324) de ladite cale est moins inclinée par rapport à ladite direction axiale que ladite première surface (25 ; 325).

8. Volant selon l'une quelconque des revendications 5 à 7, **caractérisé en ce qu'**il comporte une pluralité de dites cales d'encliquetage (23A, 23B, 23C ; 323A, 323B ,323C), deux cales voisines étant séparées par un redent (17A, 17B, 17C ; 317A, 317B, 317C) solidaires de ladite surface d'appui (16 ; 316).

9. Volant selon la revendication 8, **caractérisé en ce que** lesdits redents (17A, 17B, 17C ; 317A, 317B, 317C) et lesdites cales (23A, 23B. 23C ; 323A, 323B,323C) présentent des parois latérales (19, 26) orientées suivant un plan radial.

10. Volant selon l'une quelconque des revendications 8 ou 9, **caractérisé en ce qu'**il comporte trois dites cales d'encliquetage (23A, 23B, 23C; 323A, 323B, 323C).

11. Volant selon l'une quelconque des revendications 5 à 10, **caractérisé en ce qu'**il comporte une bague de déverrouillage (30 ; 330 ; 330'), admettant :
- une position de déverrouillage dans laquelle elle soulève suffisamment chaque dite cale d'encliquetage (23A, 23B, 23C ; 323A, 323B, 323C) à l'encontre dudit moyen élastique (38 ; 338) pour que l'écartement minimum entre lesdites cales soit au moins égal à l'encombrement radial maximum d'un embout d'encliquetage (7 ; 107 ; 207 ; 307) dont fait partie ladite surface inclinée (10 ; 110 ; 210 ; 310) avec laquelle la deuxième surface inclinée (24 ; 324) est adaptée à coopérer ; et
- une position de verrouillage dans laquelle ladite bague n'agit pas sur lesdites cales.

12. Volant selon la revendication 11, **caractérisé en ce qu'**un moyen de rappel élastique (38 ; 338 ; 47) sollicite ladite bague de déverrouillage (30 ; 330 ; 330') vers ladite position de verrouillage.

13. Volant selon l'une quelconque des revendications 11 ou 12, **caractérisé en ce que** ladite bague de déverrouillage (30 ; 330 ; 330') comporte un levier de manoeuvre (33 ; 333 ; 333') mobile dans un évidement latéral (28 ; 328 ; 328') du moyeu dudit volant.

14. Volant selon la revendication 13, **caractérisé en ce que** ledit levier (33) comporte un orifice (34) de réception d'un outil de manoeuvre.

15. Volant selon la revendication 13, **caractérisé en ce que** ledit levier (333') est adapté à être inséré dans un creux d'extrémité d'un outil de manoeuvre (46).

16. Volant selon la revendication 15, **caractérisé en ce qu'**il comporte un moyen de blocage (336', 48) pour bloquer dans ladite position de déverrouillage ledit outil (46) engagé sur ledit levier (333'), ledit moyen de blocage étant adapté à ne pas entrer en contact avec ledit levier (333'), un moyen de rappel élastique (47) étant prévu pour ramener ladite bague de déverrouillage dans ladite position de verrouillage.

17. Volant selon la revendication 16, **caractérisé en ce que** lesdits moyens de blocage comportent un bossage (48) ménagé sur un chapeau (336') dudit moyeu.

18. Colonne convenant au système selon l'une quelconque des revendications 1 à 4, comportant un embout d'encliquetage (107 ; 207) présentant une surface d'extrémité (109 ; 209) se raccordant à une surface latérale (110 ; 210) en retrait par rapport à ladite surface d'extrémité (109 ; 209) ; **caractérisée en ce que** ledit embout (107 ; 207) est fixé par vissage dans un trou taraudé (41) ou sur une tige filetée (44) normalement prévu(e) pour accueillir respectivement une vis et un écrou de verrouillage de volant.

## Patentansprüche

1. Fahrzeuglenksystem mit:
- einer Säule, die ein mit einer Anschlagfläche (5; 105; 205; 305) versehenes Endteil (1; 101; 201; 301) aufweist,
- einem Lenkrad, umfassend eine Nabe, die eine Bohrung zum durch axiales Aufschieben Ineingriffkommen mit dem Endteil (1; 101; 201; 301) der Säule, eine Widerlagerfläche (13; 313) zum Abstützen an der Anschlagfläche (5; 105; 205; 305) der Säule, um die Aufschiebebewegung der Nabe gegenüber der Säule in axialer Richtung anzuhalten, sowie eine zur Widerlagerfläche (13; 313) entgegengesetzte Stützfläche (16; 316) aufweist, die eine Abstützung für ein axiales Verriegelungsmittel liefert, welches zum Ineingriffhalten der Nabe mit der Anschlagfläche (5; 105; 205; 305) der Säule, auf der sich dann die Widerlagerfläche (13; 313) der Nabe abstützt, dient, und sich das Verriegelungsmittel folglich auf der Stützfläche (16; 316) abstützt, wenn es sich mit der Säule im Eingriff befindet;
wobei in dem System:
- das Endteil (1; 101; 201; 301) der Säule einen Sperransatz (7; 107; 207; 307) hat, welcher durch die Bohrung (12; 312) der Nabe des Lenkrades hindurchführbar ist und eine Endfläche (9; 109; 209; 309) aufweist, welche sich mit einer Seitenfläche (10; 110; 210; 310) beim Zusammenziehen bezüglich der Endfläche (9; 109; 209; 309) verbindet; und
- das Verriegelungsmittel der Nabe des Lenkrades mindestens ein Sperrelement (23A, 23B, 23C; 323A, 323B, 323C) aufweist, welches eine Verriegelungsstellung zuläßt, in der es sich sowohl auf der Stützfläche (16; 316) der Nabe als auch auf der Seitenfläche (10; 110; 210; 310) des Sperransatzes (7; 107; 207; 307) der Säule abstützt, wenn die Widerlagerfläche (13; 313) der Nabe sich auf der Anschlagfläche (5; 105; 205; 305) der Säule abstützt, wobei in der Nabe (2; 302) ein federndes Mittel (38; 338) zum Vorspannen des Sperrelementes in die Verriegelungsstellung vorgesehen ist;
wobei das System **dadurch gekennzeichnet ist,**
- **dass** die Seitenfläche (10; 110; 210; 310) des Endteils (1; 101; 201; 301) der Säule in axialer Richtung nach innen und zur Anschlagfläche (5; 105; 205; 305) hin so geneigt verläuft, wie die Stützfläche (16; 316) der Nabe des Lenkrades in axialer Richtung nach innen und zur Widerlagerfläche (13; 3139 hin geneigt verläuft, die der Seitenfläche (10; 110; 210; 310) des Sperransatzes (7; 107; 207; 307) der Säule zugewandt ist, wenn sich die Widerlagerfläche (13; 313) der Nabe auf der Anschlagfläche (5; 105; 205; 305) der Säule abstützt; und
- **dass** das Verriegelungsmittel ein starres Paßstück (23A, 23B, 23C; 323A, 323B, 323C) ist, welches in Richtung der Stützfläche (16; 316) durch das federnde Mittel (38; 338) vorgespannt ist, wobei das Paßstück (23A, 23B, 23C; 323A, 323B, 323C) eine erste geneigte Fläche (25; 325) zum Abstützen an der Stützfläche (16; 316) sowie eine zur ersten Fläche entgegengesetzte, zweite geneigte Fläche (24; 324) zum Zusammenwirken mit der Seitenfläche (10; 110; 210; 310) des Ansatzes aufweist.

2. System nach Anspruch 1, **dadurch gekennzeichnet, dass** die Seitenfläche (10; 210; 310) des Sperransatzes (7; 107; 207) kegelstumpfartig ist, wobei das Endteil (1; 101; 201) einen ausgeprägten Abschnitt (4; 104; 204) zum Festsetzen der Drehung der Nabe (2) aufweist.

3. System nach Anspruch 1, **dadurch gekennzeichnet, dass** die Seitenfläche (310) des Sperransatzes (307) in Form einer stumpfen Pyramide ausgebildet ist.

4. System nach Anspruch 3, **dadurch gekennzeichnet, dass** die Seitenfläche (310) des Sperransatzes (307) in Form einer stumpfen Pyramide mit hexagonaler Grundfläche ausgebildet ist, wobei das Lenkrad drei Verriegelungs-Paßstücke aufweist.

5. Lenkrad zum Steuern eines Fahrzeuges, passend zu dem System nach einem der Ansprüche 1 bis 4, mit einer Nabe (2; 302), welche:
- eine Bohrung zum durch axiales Aufschieben Ineingriffkommen mit dem Endteil (1; 101; 201; 301) einer Lenksäule in dem Fahrzeug;
- eine Widerlagerfläche (13; 313) zum Abstützen auf einer zur Säule korrespondierenden Anschlagfläche (5; 105; 205; 305), um die Aufschiebebewegung der Nabe gegenüber der Säule in axialer Richtung anzuhalten; und
- eine zur Widerlagerfläche (13; 313) entgegengesetzte Stützfläche (16; 316) aufweist, welche eine Abstützung für ein axiales Verriegelungsmittel liefert, das zum Ineingriffhalten der Nabe mit der Anschlagfläche der Säule, auf der sich dann die Widerlagerfläche der Nabe abstützt, dient, und sich das Verriegelungsmittel folglich auf der Stützfläche abstützt, wenn es sich mit der Säule im Eingriff befindet;
**dadurch gekennzeichnet,**
- **dass** die Stützfläche (16; 316) der Nabe des Lenkrades in axialer Richtung nach innen und zur Widerlagerfläche (13; 313) hin geneigt verläuft und
- **dass** das Verriegelungsmittel mindestens ein starres Paßstück (23A, 23B, 23C; 323A, 323B, 323C) aufweist, welches in Richtung der Stützfläche (16; 316) durch ein federndes Mittel (38; 338) vorgespannt ist, wobei das Paßstück (23A, 23B, 23C; 323A, 323B, 323C) eine erste geneigte Fläche (25; 325) zum Abstützen an der Stützfläche (16; 316) sowie eine zur ersten Fläche entgegengesetzte, zweite geneigte Fläche (24; 324) zum Zusammenwirken mit der Seitenfläche (10; 110; 210; 310) des Ansatzes aufweist.

6. Lenkrad nach Anspruch 5, **dadurch gekennzeichnet, dass** die Stützfläche (16; 316) kegelstumpfartig und koaxial zur Nabe (2; 302) verläuft.

7. Lenkrad nach einem der Ansprüche 5 oder 6, **dadurch gekennzeichnet, dass** die zweite Fläche (24; 324) des Paßstücks weniger geneigt in axialer Richtung verläuft als die erste Fläche (25; 325).

8. Lenkrad nach einem der Ansprüche 5 bis 7, **dadurch gekennzeichnet, dass** es eine Vielzahl der Verriegelungs-Paßstücke (23A, 23B, 23C; 323A, 323B, 323C) aufweist, wobei zwei benachbarte Paßstücke durch einen mit der Stützfläche (16; 316) einstückig ausgebildeten Zahn (17A, 17B, 17C; 317A, 317B, 317C) voneinander getrennt sind.

9. Lenkrad nach Anspruch 8, **dadurch gekennzeichnet, dass** die Zähne (17A, 17B, 17C; 317A, 317B, 317C) und die Paßstücke (23A, 23B, 23C; 323A, 323B, 323C) in einer radialen Ebene ausgerichtete Seitenflächen (19; 26) aufweisen.

10. Lenkrad nach einem der Ansprüche 8 oder 9, **dadurch gekennzeichnet, dass** es drei der Verriegelungs-Paßstücke (23A, 23B, 23C; 323A, 323B, 323C) aufweist.

11. Lenkrad nach einem der Ansprüche 5 bis 10, **dadurch gekennzeichnet, dass** es einen Entriegelungsring (30; 330; 330') aufweist, der
- eine Entriegelungsstellung, in der er jedes der Verriegelungs-Paßstücke (23A, 23B, 23C; 323A, 323B, 323C) gegen das federnde Mittel (38; 338) soweit anhebt, bis der Zwischenraum zwischen diesen Paßstücken wenigstens gleich dem maximalen radialen Abstand eines Sperransatzes (7; 107;207; 307) ist, welcher Teil der geneigten Oberfläche (10; 110; 210; 310) ist, mit der die zweite geneigte Fläche (24; 324) zusammenwirken soll; und
- eine Verriegelungsstellung zuläßt, in der der Ring nicht auf die Paßstücke einwirkt.

12. Lenkrad nach Anspruch 11, **dadurch gekennzeichnet, dass** ein selbstfederndes Mittel (38; 338; 47) den Entriegelungsring (30; 330, 330') in die Verriegelungsstellung vorgespannt ist.

13. Lenkrad nach einem der Ansprüche 11 oder 12, **dadurch gekennzeichnet, dass** der Entriegelungsring (30; 330; 330') einen in einer seitlichen Ausnehmung (28; 328; 328') der Nabe des Lenkrades beweglichen Stellhebel (33; 333; 333') aufweist.

14. Lenkrad nach Anspruch 13, **dadurch gekennzeichnet, dass** der Hebel (33) eine Öffnung (34) für die Aufnahme eines Handwerkzeuges hat.

15. Lenkrad nach Anspruch 13, **dadurch gekennzeichnet, dass** der Hebel (333') in eine Ausnehmung am Ende eines Handwerkzeuges (46) einführbar ist.

16. Lenkrad nach Anspruch 15, **dadurch gekennzeichnet, dass** es ein Blockiermittel (336', 48) zum Blockieren des mit dem Hebel (333') in Eingriff stehenden Werkzeuges (46) in der Entriegelungsstellung aufweist, wobei das Blockiermittel nicht mit dem Hebel (333') in Berührung bringbar ist, und wobei ein selbstfederndes Mittel (47) vorgesehen ist, um den Entriegelungsring in die Verriegelungsstellung zurückzustellen.

17. Lenkrad nach Anspruch 16, **dadurch gekennzeichnet, dass** das Blockiermittel einen an einer Abdeckung (336') der Nabe ausgeformten Vorsprung (48) hat.

18. Säule, verwendbar für ein System nach einem der Ansprüche 1 bis 4, mit einem Sperransatz (107; 207), welcher eine Endfläche (109; 209) bildet, die sich mit einer Seitenfläche (110; 210) beim Zusammenziehen zum Verbinden mit der Endfläche (109; 209) verbindet, **dadurch gekennzeichnet, dass** der Ansatz (107; 207) durch Schrauben in einer Gewindebohrung (41) oder an einem Gewindeschaft (44) befestigt ist, die bzw. der üblicherweise zur Aufnahme einer Feststellschraube oder einer Feststellmutter für das Lenkrad vorgesehen ist.

## Claims

1. Steering system for a vehicle, comprising:
- a column having an end part (1; 101; 201; 301) provided with a stop surface (5; 105; 205; 305); and
- a steering wheel comprising a hub having a bore adapted to engage by sliding in an axial direction on the said end part (1; 101; 201; 301) of the said column, having an abutment surface (13; 313) adapted to bear on the said stop surface (5; 105; 205; 305) of the said column in order to stop the pressing-in movement of the hub vis-à-vis the column in the said axial direction, and having a support surface (16; 316) opposite to the said abutment surface (13; 313), adapted to provide a support for an axial locking means serving to keep the said hub gripped between the stop surface (5; 105; 205; 305) of the column, on which there then bears the abutment surface (13; 313) of the hub, and the said locking means, then bearing on the support surface (16; 316) whilst it is in engagement on the said column;
a system in which:
- the said end part (1, 101; 201; 301) of the column comprises a snapping-in end piece (7; 107; 207; 307) adapted to pass into the bore (12; 312) of the hub of the steering wheel and having an end surface (9; 109; 209; 309) connected to a lateral surface (10; 110; 210; 310) recessed with respect to the said end surface (9; 109; 209; 309); and
- the said locking means for the hub of the steering wheel comprises at least one snapping-in element (23A, 23B, 23C; 323A, 323B, 323C) allowing a locking position in which it is adapted to bear both on the said support surface (16; 316) of the hub and on the said lateral surface (10; 110; 210; 310) of the snapping-in end piece (7; 107; 207; 307) of the column when the abutment surface (13; 313) of the hub bears on the stop surface (5; 105; 205; 305) of the column, an elastic means (38; 338) being provided in the said hub (2; 302) in order to force the said snapping-in element (23A, 23B, 23C; 323A, 323B, 323C) towards the said locking position;
a system **characterised in that**:
- the said lateral surface (10; 110; 210; 310) of the said end part (1; 101; 201; 301) of the column is inclined with respect to the said axial direction, towards the inside and towards the said stop surface (5; 105; 205; 305), whilst the said support surface (16; 316) of the hub of the steering wheel is inclined with respect to the said axial direction, towards the inside and towards the said abutment surface (13; 313), and comes opposite the said lateral surface (10; 110; 210; 310) of the snapping-in end piece (7; 107; 207; 307) of the column when the abutment surface (13; 313) of the hub bears on the stop surface (5; 105; 205; 305) of the column; and
- the said snapping-in element is a rigid wedge (23A, 23B, 23C; 323A, 323B, 323C) forced towards the said support surface (16; 316) by the said elastic means (38; 338), the said wedge (23A, 23B, 23C; 323A, 323B, 323C) comprising a first inclined surface (25; 325) adapted to bear on the said support surface (16; 316) and comprising a second inclined surface (24; 324) opposed to the said first surface, adapted to cooperate with the said lateral surface (10; 110; 210; 310) of the said end piece.

2. System according to Claim 1, **characterised in that** the said lateral surface (10; 110; 210) of the snapping-in end piece (7; 107; 207) is frustoconical, the said end part (1; 101; 201) comprising a distinct portion (4; 104; 204) in order to rotationally immobilise the said hub (2).

3. System according to Claim 1, **characterised in that** the said lateral surface (310) of the said snapping-in end piece (307) is in the shape of a truncated pyramid.

4. System according to Claim 3, **characterised in that** the said lateral surface (310) of the said snapping-in end piece (307) is in the shape of a truncated pyramid with a hexagonal base, the said steering wheel comprising three of the said snapping-in wedges.

5. Steering wheel for a vehicle, suitable for the system according to any one of Claims 1 to 4, comprising a hub (2; 302) having:
- a bore adapted to engage by sliding in an axial direction on the end part (1; 101; 201; 301) of a steering column on the vehicle;
- an abutment surface (13; 313) adapted to bear on a corresponding stop surface (5; 105; 205; 305) on the said column in order to stop the pressing-in movement of the hub vis-à-vis the column in the said axial direction; and
- a support surface (16; 316) opposite to the said abutment surface (13; 313), adapted to provide a support for an axial locking means serving to keep the hub gripped between the stop surface on the column, on which there then bears the abutment surface of the hub, and the said locking means, then bearing on the support surface whilst it is in engagement on the said column;
**characterised in that**:
- the said support surface (16; 316) is inclined with respect to the said axial direction, towards the inside and towards the said abutment surface (13; 313); and
- the said locking means comprises at least one rigid snapping-in wedge (23A, 23B, 23C; 323A, 323B, 323C) forced towards the said support surface (16; 316) by an elastic means (38; 338), the said wedge (23A, 23B, 23C; 323A, 323B, 323C) comprising a first inclined surface (25; 325) adapted to bear on the said support surface (16; 316) and comprising a second inclined surface (24; 324) opposite to the said first surface, adapted to cooperate with an inclined surface (10; 110; 210; 310) on the said column.

6. Steering wheel according to Claim 5, **characterised in that** the said support surface (16; 316) is frustoconical and coaxial with the hub (2; 302).

7. Steering wheel according to either one of Claims 5 or 6, **characterised in that** the said second surface (24; 324) of the said wedge is less inclined with respect to the said axial direction than the said first surface (25; 325).

8. Steering wheel according to any one of Claims 5 to 7, **characterised in that** it comprises a plurality of the said snapping-in wedges (23A, 23B, 23C; 323A, 323B, 323C), two adjacent wedges being separated by a step (17A, 17B, 17C; 317A, 317B, 317C) integral with the said support surface (16; 316).

9. Steering wheel according to Claim 8, **characterised in that** the said steps (17A, 17B, 17C; 317A, 317B, 317C) and the said wedges (23A, 23B, 23C; 323A, 323B, 323C) have lateral walls (19, 26) oriented in a radial plane.

10. Steering wheel according to either one of Claims 8 or 9, **characterised in that** it comprises three said snapping-in wedges (23A, 23B, 23C; 323A, 323B, 323C).

11. Steering wheel according to any one of Claims 5 to 10, **characterised in that** it comprises an unlocking ring (30; 330; 330'), allowing:
- an unlocking position in which it sufficiently raises each said snapping-in wedge (23A, 23B, 23C; 323A, 323B, 323C) counter to the said elastic means (38; 338) so that the minimum separation between the said wedges is at least equal to the maximum radial size of a snapping-in end piece (7; 107; 207; 307) of which the said inclined surface (10; 110; 210; 310), with which the second inclined surface (24; 324) is adapted to cooperate, forms part; and
- a locking position in which the said ring does not act on the said wedges.

12. Steering wheel according to Claim 11, **characterised in that** an elastic return means (38; 338; 47) forces the said unlocking ring (30; 330; 330') towards the said locking position.

13. Steering wheel according to either one of Claims 11 or 12, **characterised in that** the said unlocking ring (30; 330; 330') comprises a manoeuvring lever (33; 333; 333') able to move in a lateral recess (28; 328; 328') in the hub of the said steering wheel.

14. Steering wheel according to Claim 13, **characterised in that** the said lever (33) comprises an orifice (34) for receiving a manoeuvring tool.

15. Steering wheel according to Claim 13, **characterised in that** the said lever (333') is adapted to be inserted in an end hollow in a manoeuvring tool (46).

16. Steering wheel according to Claim 15, **characterised in that** it comprises a locking means (336', 48) for locking in the said unlocking position the said tool (46) engaged on the said lever (333'), the said locking means being adapted not to come into contact with the said lever (333'), an elastic return means (47) being provided in order to return the said unlocking ring into the said locking position.

17. Steering wheel according to Claim 16, **characterised in that** the said locking means comprise a protrusion (48) provided on a cap (336') on the said hub.

18. Column suitable for the system according to any one of Claims 1 to 4, comprising a snapping-in end piece (107; 207) having an end surface (109; 209) connected to a lateral surface (110; 210) recessed with respect to the said end surface (109; 209) ; **characterised in that** the said end piece (107; 207) is fixed by screwing into a threaded hole (41) or onto a threaded rod (44) normally provided to accept respectively a screw and a nut for locking the steering wheel.
